# NEUE EUROPÄISCHE PATENTSCHRIFT

(11) **EP 3 507 044 B2**
(45) Veröffentlichungstag und Bekanntmachung des Hinweises auf die Entscheidung über den Einspruch: **07.01.2026**
(45) Hinweis auf die Patenterteilung: 30.09.2020
(21) Anmeldenummer: 17737220.8
(22) Anmeldetag: 22.06.2017
(51) Int. Cl.: B23C 5/10, B23P 15/34

(54) **EINSCHNEIDIGES FRÄSWERKZEUG**
SINGLE EDGE MILLING TOOL
OUTIL DE FRAISAGE À UN SEUL TRANCHANT

(30) Priorität: 31.08.2016 DE 102016116279
(43) Veröffentlichungstag der Anmeldung: 10.07.2019
(73) Patentinhaber: Datron AG, 64367 Mühltal-Traisa (DE)
(72) Erfinder: DOLZE, Frank, 64293 Darmstadt (DE)
(74) Vertreter: Habermann Intellectual Property Partnerschaft von Patentanwälten mbB
(86) Internationale Anmeldenummer: PCT/EP2017/065417
(87) Internationale Veröffentlichungsnummer: WO 2018/041436

(56) Entgegenhaltungen:
- DE-A1- 102006 037 906
- DE-A1- 102006 058 258
- DE-A1- 3 509 753
- US-B2- 7 905 688

## Beschreibung

Die Erfindung betrifft ein einschneidiges Fräswerkzeug mit einem Schaftabschnitt und einem Bearbeitungsabschnitt, wobei an einem dem Schaftabschnitt abgewandten Ende des Bearbeitungsabschnitts eine Stirnschneide ausgebildet ist, die sich in radialer Richtung von einem Außenende an einem äußeren Umfangsrand bis zu einem beabstandet von dem äußeren Umfangsrand angeordneten und rotationsachsennahen Innenende erstreckt.

Zerspanungswerkzeuge sind in vielfältigen Ausführungsformen bekannt und werden beispielsweise als Bohrer oder Fräser verwendet. Das Zerspanungswerkzeug kann in dem Bearbeitungsabschnitt eine oder mehrere Schneiden aufweisen, die bei einer Rotation des Zerspanungswerkzeugs Material von einem zu bearbeitenden Werkstück abtrennen können. Die abgetrennten Späne werden üblicherweise durch eine Spannut oder durch mehrere Spannuten von dem Werkstück abgeführt, wobei sich die eine Spannut oder mehreren Spannuten vorzugsweise spiralförmig in axialer Richtung entlang der Rotationsachse von der mindestens einen Schneide in Richtung des Schaftabschnitts erstrecken.

Es sind Zerspanungswerkzeuge bekannt, die eine oder mehrere austauschbare Schneidklingen mit jeweils einer Schneide aufweisen. Es sind auch einstückig hergestellte Zerspanungswerkzeuge bekannt, bei denen in dem Bearbeitungsabschnitt eine Schneide oder aber mehrere Schneiden ausgebildet sind. Die austauschbaren Schneidklingen oder die in dem Bearbeitungsabschnitt des Zerspanungswerkzeugs einstückig ausgebildeten Schneiden können radial nach außen gerichtet sein und bei einer Rotation des Zerspanungswerkzeugs eine durch den in axialer Richtung erfolgenden Verlauf der Schneiden längs des äußeren Umfangsrands vorgegebene Mantelfläche zerspanen. Die Schneidklingen oder Schneiden können auch an einer Stirnseite des Zerspanungswerkzeugs angeordnet sein und bei einem Eintauchen des Zerspanungswerkzeugs in das zu bearbeitende Werkstück an der Stirnseite des Zerspanungswerkzeugs Material abtrennen und abgetrennte Späne von dem Werkstück wegfördern. Ein einschneidiges Fräswerkzeug ist oftmals einstückig hergestellt und weist eine einzelne Schneide auf, die sich über einen Bereich der Stirnseite erstreckt. Oftmals erstreckt sich die Schneide auch über einen an die Stirnseite angrenzenden Abschnitt des Bearbeitungsabschnitts und verläuft längs eines äußeren Umfangsrands in axialer Richtung. Der an der Stirnseite verlaufende Abschnitt wird im Folgenden als Stirnschneide und ein gegebenenfalls in axialer Richtung längs eines äußeren Umfangsrands verlaufender Abschnitt als Mantelschneide bezeichnet.

Einstückig hergestellte einschneidige Fräswerkzeuge weisen üblicherweise einen Durchmesser von bis zu 20 mm auf. Größere Fräswerkzeuge mit einem größeren Durchmesser werden in vielen Fällen mehrteilig ausgestaltet und können mehrere Schneiden oder auswechselbare Schneidklingen aufweisen. Es ist ebenfalls möglich, dass der Bearbeitungsabschnitt einstückig ausgebildet ist und von dem Schaftabschnitt getrennt bzw. bei Bedarf ausgewechselt werden kann.

Ein einschneidiges Fräswerkzeug der eingangs genannten Gattung kann in vorteilhafter Weise als Fräswerkzeug eingesetzt werden. Mit der an der Stirnseite ausgebildeten Stirnschneide kann auch eine der Stirnseite zugewandte Oberfläche des Werkstücks bearbeitet werden. Es sind einschneidige Fräswerkzeuge mit einer ebenen Stirnschneide bekannt, die senkrecht zu der Rotationsachse ausgerichtet ist und sich von einem äußeren Umfangsrand in Richtung der Rotationsachse sowie üblicherweise bis über die Rotationsachse des einschneidigen Fräswerkzeugs hinweg erstreckt. Mit einer derartigen vollständig ebenen, bzw. senkrecht zu der Rotationsachse ausgerichteten Stirnschneide kann eine qualitativ hochwertige Oberflächenbearbeitung des Werkstücks durchgeführt und eine nahezu vollständig ebene Oberfläche in einem damit bearbeiteten Bereich des Werkstücks erreicht werden. Allerdings erlaubt eine derartige Oberflächenbearbeitung nur vergleichsweise niedrige Schnittwerte und einen geringen Vorschub des einschneidigen Fräswerkzeugs in axialer Richtung beim Eintauchen in das Werkstück. Bei Fräsbewegung in radialer Richtung zu dem einschneidigen Fräswerkzeug reibt der vorwiegende Teil der Stirnschneide funktionslos auf der zu bearbeiteten Oberfläche, was sich negativ auf die Schnittwerte und die Standzeit auswirkt. In der Praxis werden derartige einschneidige Fräswerkzeuge üblicherweise nur dann eingesetzt, wenn eine qualitativ hochwertige Oberflächenbearbeitung des Werkstücks erforderlich ist und der höhere Bearbeitungsaufwand wirtschaftlich gerechtfertigt erscheint.

Es sind auch einschneidige Fräswerkzeuge mit einer Stirnschneide bekannt, deren Verlauf einen Winkel zu einer Lotrechten auf die Rotationsachse aufweist, sodass die Stirnschneide mit zunehmendem radialen Abstand von der Rotationsachse nach außen hin tiefer in das zu bearbeitende Werkstück eindringt. Die rotierende Stirnschneide bildet eine beispielsweise kegelförmige Mantelfläche, die bei einer Bearbeitung des Werkstücks hohe Schnittwerte und größere Vorschubgeschwindigkeiten erlaubt und dadurch das wirtschaftlichere Fräswerkzeug für die Bearbeitung des Werkstücks darstellt. Allerdings ist die mit der schräg verlaufenden Stirnschneide bearbeitete Oberfläche des Werkstücks nicht vollständig eben, sondern wird vielmehr durch eine große Anzahl von rillenförmigen Vertiefungen gebildet, die durch die rotierende und schräg in einem Winkel zu der ebenen Oberfläche verlaufende Stirnschneide erzeugt werden.

In der Praxis ist es deshalb bekannt, ein Werkstück zunächst mit einem einschneidigen Fräswerkzeug mit einer schräg verlaufenden Stirnschneide zu bearbeiten und lediglich diejenigen Oberflächen des Werkstücks nachträglich mit einem anderen Fräswerkzeug bzw. Zerspanungswerkzeug oder aber mit anderen Methoden nachzubearbeiten, die eine hohe Oberflächenqualität und insbesondere eine möglichst ebenflächige Oberfläche aufweisen müssen.

Ein einschneidiges Fräswerkzeug gema8 dem Oberbegriff des Anspruchs 1 ist aus DE 10 2006 037 906 A1 bekannt.

Es wird als eine Aufgabe der vorliegenden Erfindung angesehen, ein einschneidiges Fräswerkzeug der eingangsgenannten Gattung so weiterzuentwickeln, dass bei einer möglichst wirtschaftlichen Bearbeitung eines Werkstücks gleichzeitig eine möglichst hohe Oberflächengüte einer bearbeiteten Oberfläche des Werkstücks ermöglicht wird.

Diese Aufgabe wird durch ein einschneidiges Fräswerkzeug mit den Merkmalen von Anspruch 1 gelöst, wobei die Stirnschneide an ihrem dem äußeren Umfangsrand zugewandten Außenende einen Planabschnitt aufweist, in welchem die Stirnschneide einen konstanten Planabstand zu einer in dem Schaftabschnitt senkrecht zur Rotationsachse verlaufenden Referenzebene aufweist, und einen sich an den Planabschnitt anschließenden und bis zu dem Innenende verlaufenden Schrägabschnitt aufweist, in welchem die Stirnschneide einen geringeren Abstand als den Planabstand zu der Referenzebene aufweist. Der Planabschnitt der rotierenden Stirnschneide überstreicht einen Kreisring auf der Oberfläche des Werkstücks, dessen äußerer Kreis durch das radial außenliegende Ende des Planabschnitts und dessen innerer Kreis durch das radial innenliegende Ende des Planabschnitts gebildet werden. In diesem Planabschnitt verläuft die Stirnschneide in einer Ebene senkrecht zu der Rotationsachse und bildet eine vollständig ebene Schneidfläche. Die Stirnschneide kann dabei gradlinig verlaufen und sich senkrecht zur Rotationsachse radial nach außen erstrecken. Die Stirnschneide kann jedoch in einer senkrecht zur Rotationsachse ausgerichteten Ebene auch einen gekrümmten Verlauf aufweisen, um beispielsweise längs einer Mantelfläche einer Spannut zu verlaufen. Der gekrümmte Verlauf der Stirnschneide ist bei einer Stirnseitenansicht des einschneidigen Fräswerkzeugs deutlich erkennbar, während bei einer Seitenansicht der konstante Planabstand der Stirnschneide in dem Planabschnitt deutlich wird. Bei einer Seitenansicht ist zudem erkennbar, dass sich entgegen der Rotationsrichtung eine Freifläche an die Stirnschneide anschließt, wobei die üblicherweise ebene Freifläche einen Freiwinkel von einigen Grad zu der Ebene aufweist, in welcher der Planabschnitt der Stirnschneide verläuft.

Wenn das einschneidige Fräswerkzeug mit einer Vorschubgeschwindigkeit parallel zu der bearbeitenden Oberfläche des Werkstücks verfahren wird, die so bemessen ist, dass der während einer Umdrehung des einschneidigen Fräswerkzeugs vorgegebene seitliche Vorschub ausreichend geringer als eine Ringbreite des durch den rotierenden Planabschnitt gebildeten Kreisrings ist, wird die Oberfläche des Werkstücks ausschließlich von dem Planabschnitt der Stirnschneide endbearbeitet und eine in der Praxis nahezu vollständig ebene Oberfläche des Werkstücks erzeugt.

Es hat sich gezeigt, dass durch den schräg verlaufenden Schrägabschnitt der Stirnschneide, der sich an den Planabschnitt anschließt, erheblich höhere Schnittwerte und Vorschubgeschwindigkeiten erzielen lassen als bei einer vollständig ebenen Stirnschneide, da sowohl bei dem Eintauchen des einschneidigen Fräswerkzeugs in das Werkstück als auch bei einem parallel zu der zu bearbeitenden Oberfläche erfolgenden Verfahren des einschneidigen Fräswerkzeugs die vorteilhaften Eigenschaften einer schräg verlaufenden Stirnschneide durch den Schrägabschnitt weitestgehend beibehalten werden. Mit der erfindungsgemäß ausgebildeten Stirnschneide, die einen ebenen Planabschnitt und einen zur Rotationsachse hin in Richtung des Schaftabschnitts schräg verlaufenden Schrägabschnitt aufweist, können sowohl eine rasche und wirtschaftliche Bearbeitung eines Werkstücks als auch eine hohe Oberflächenqualität eines bearbeiteten Oberflächenabschnitts eines Werkstücks ermöglicht werden.

Es ist grundsätzlich möglich und für zahlreiche Anwendungen des erfindungsgemäßen einschneidigen Fräswerkzeugs vorteilhaft, dass das einschneidige Fräswerkzeug in dem Bearbeitungsabschnitt auch eine sich in axialer Richtung längs des äußeren Umfangsrands erstreckende Mantelschneide aufweist. Die Mantelschneide erstreckt sich in axialer Richtung bis zu der Stirnseite des einschneidigen Fräswerkzeugs und schließt an die Stirnschneide an, so dass die Mantelschneide im Bereich der Stirnseite in diese übergeht. Längs der Mantelschneide und der Stirnschneide verläuft zweckmäßigerweise eine Spannut, in welcher die abgetrennten Späne von der Stirnschneide und gegebenenfalls von der Mantelschneide abgeführt und von dem bearbeiteten Werkstück weggeführt werden können.

Die Stirnschneide erstreckt sich ausgehend von dem äußeren Umfangsrand in radialer Richtung über die Rotationsachse auf eine dem Außenende der Stirnschneide gegenüberliegende Seite bis zu einem radialen Abstand von der Rotationsachse von etwa 1% bis 20%, vorzugsweise 2% bis 10% des Radius des einschneidigen Fräswerkzeugs, was für viele Anwendungsbereiche als vorteilhaft angesehen wird. Auf diese Weise kann sichergestellt werden, dass die Stirnschneide bei einer Rotation des Fräswerkzeugs den der Stirnseite zugewandten Bereich des Werkstücks vollständig überstreicht und über die gesamte Fläche hinweg Material abtrennen kann, ohne dass beispielsweise in Verlängerung der Rotationsachse ein mittiger Zapfen an dem Werkstück verbleibt. Bei dem erfindungsgemäßen einschneidigen Fräswerkzeug kann die Stirnschneide in dem jenseits der Rotationsachse verlaufenden Bereich des Schrägabschnitts einen zunehmend geringeren Abstand zu der Referenzebene, gegebenenfalls aber auch einen gleichbleibenden oder eventuell wieder größer werdenden Abstand zu der Referenzebene aufweisen, der jedoch in jedem Fall geringer als der Planabstand des Planabschnitts zu der Referenzebene sein muss.

Gemäß einer vorteilhaften Ausgestaltung des Erfindungsgedankens ist vorgesehen, dass der Planabschnitt der Stirnschneide eine Länge zwischen 2% und 60%, vorzugsweise eine Länge zwischen 3% und 20% der Länge der Stirnschneide aufweist. Es hat sich gezeigt, dass mit einem Planabschnitt der Stirnschneide, der eine derartige Länge aufweist, die für vollständig schräg verlaufende Stirnschneiden üblichen hohen Vorschubgeschwindigkeiten beibehalten werden können und gleichzeitig eine qualitativ hochwertige Oberflächenbearbeitung durch den Planabschnitt der Stirnschneide erfolgen kann. Es erscheint erfindungsgemäß zweckmäßig, die Länge des Planabschnitts der Stirnschneide im Hinblick auf eine bei der Bearbeitung eines Werkstücks gewünschte Vorschubgeschwindigkeit so anzupassen, dass die während einer vollständigen Umdrehung und eines mit der Vorschubgeschwindigkeit erfolgenden seitlichen Verlagerns der Stirnschneide erzeugte Ringbreite der von dem Planabschnitt überstrichenen nahezu kreisringförmigen Fläche größer als die mit der seitlichen Vorschubgeschwindigkeit während einer vollständigen Umdrehung des einschneidigen Fräswerkzeugs zurückgelegten seitlichen Vorschubstrecke ist. Auf diese Weise kann sichergestellt werden, dass bei einer Bearbeitung einer Oberfläche eines Werkstücks der Planabschnitt der Stirnschneide über die gesamte zu bearbeitende Oberfläche geführt wird und dadurch eine im Wesentlichen vollständig ebene Oberfläche des Wertstücks erzeugt werden kann.

Bei einer Überlagerung eines seitlichen Vorschubs mit der Rotation des einschneidigen Fräswerkzeugs überstreicht der Planabschnitt der Stirnschneide einen kontinuierlich in Vorschubrichtung verschobenen und nach einer vollständigen Umdrehung nicht vollständig überlappenden bzw. offenen Kreisring, dessen Enden relativ zueinander in Vorschubrichtung verschoben sind. Die Länge des Planabschnitts der Stirnschneide sollte demzufolge ausreichend groß sein, um bei der gewünschten Vorschubgeschwindigkeit die zu bearbeitende Oberfläche vollständig überstreichen zu können, ohne dass eine Lücke zwischen aufeinanderfolgenden Umdrehungen des Planabschnitts auftritt. Die Länge des Planabschnitts kann in Abhängigkeit von der Länge der Stirnschneide und der während eines Betriebs angestrebten Vorschubgeschwindigkeit auch beispielsweise nur 1% oder aber mehr als 40%, nämlich eventuell 50% oder 60% der Länge der Stirnschneide betragen.

Erfindungsgemäß ist vorgesehen, dass sich der Abstand der Stirnschneide von der Referenzebene in dem Schrägabschnitt von dem Planabschnitt ausgehend bis zu dem Innenende der Stirnschneide hin kontinuierlich verringert. Ein stufenloser oder kontinuierlicher Verlauf der Stirnschneide weist vorteilhafte Eigenschaften hinsichtlich des Herstellungsaufwands des einschneidigen Fräswerkzeugs sowie bei dessen Standzeiten auf. Zudem ist insbesondere durch einen kontinuierlichen Übergang von dem Planabschnitt zu dem Schrägabschnitt und bis zu dem Innenende der Stirnschneide hin gewährleistet, dass bei einer Oberflächenbearbeitung eines Werkstücks keine scharfen Spankanten entstehen können.

Im Hinblick auf eine möglichst wirtschaftliche Bearbeitung des Werkstücks und gleichzeitig hohe Standzeiten des einschneidigen Fräswerkzeugs ist erfindungsgemäß vorgesehen, dass eine geradlinig durch das Außenende und das Innenende der Stirnschneide verlaufende Referenzschräge einen Winkel zwischen 2° und 30°, vorzugsweise zwischen 3° und 10° relativ zu einer Senkrechten zu der Rotationsachse aufweist. Der Abstand der Stirnschneide zu der Referenzebene ist in dem Planabschnitt am größten und verringert sich mit abnehmendem Abstand zur Rotationsachse hin zunehmend, jedoch nur um einen Betrag, der deutlich kleiner als der Abstand des äußeren Umfangsrands des einschneidigen Fräswerkzeugs von der Rotationsachse ist. Dadurch kann die Stirnschneide mechanisch stabil ausgestaltet und bis zu dem äußeren Umfangsrand durch in Rotationsrichtung dahinter befindliches Material des einschneidigen Fräswerkzeugs abgestützt werden, wodurch lange Standzeiten begünstigt werden.

Gemäß einer vorteilhaften Ausgestaltung des Erfindungsgedankens ist vorgesehen, dass die von dem Schrägabschnitt während einer Rotation um die Rotationsachse gebildete Mantelfläche kegelförmig ist. Vorzugsweise ist vorgesehen, dass die Mantellinie der kegelförmigen Mantelfläche eine Neigung zwischen 2° und 30°, vorzugsweise zwischen 3° und 10° relativ zu einer Senkrechten zu der Rotationsachse aufweist. Eine derartige Ausgestaltung der Stirnschneide lässt sich besonders kostengünstig herstellen.

Erfindungsgemäß ist weiterhin vorgesehen, dass die Stirnschneide an dem äußeren Umfangsrand eine Fase aufweist. Eine derartige Fase, die sich üblicherweise lediglich über wenige Mikrometer hinweg erstreckt, dient dazu, spitz auslaufende Enden einer Schneide zu vermeiden, die erfahrungsgemäß während des Betriebs abbrechen und auf Grund der sich ergebenden unregelmäßigen Abbruchkanten anschließend ein ungleichmäßiges Schnittbild ergeben.

Gemäß einer vorteilhaften Ausgestaltung des Erfindungsgedankens ist vorgesehen, dass der Verlauf der Stirnschneide einer Umfangslinie einer sich in axialer Richtung vorzugsweise spiralförmig erstreckenden Spannut folgt. Die Stirnschneide verläuft zweckmäßigerweise längs einer Mantelfläche der Spannut, so dass die Stirnschneide einen im Raum gekrümmten Verlauf aufweist. Die Ausgestaltung und Formgebung der Spannut kann an die für das einschneidige Fräswerkzeug verwendeten Materialien sowie an die Materialien der Werkstücke angepasst sein, die mit dem einschneidigen Fräswerkzeug bearbeitet werden sollen. Dabei wird regelmäßig angestrebt, dass durch die Spannut die während der Bearbeitung des Werkstücks entstehenden Späne rasch abgeführt werden können und eine strukturelle Schwächung des einschneidigen Fräswerkzeugs durch die Ausnehmung, welche die Spannut bildet, möglichst gering ist. Es hat sich als vorteilhaft erwiesen, dass die Stirnschneide unmittelbar angrenzend an die Spannut verläuft und beispielsweise keinen seitlichen oder axialen Versatz zu der Spannut aufweist.

Nachfolgend werden verschiedene Ausführungsbeispiele für erfindungsgemäße einschneidige Fräswerkzeuge exemplarisch beschrieben, die in der Zeichnung dargestellt sind. Es zeigt:
Figur 1 eine Seitenansicht eines schematisch dargestellten einschneidigen Fräswerkzeugs,
Figur 2 eine vergrößerte Darstellung des Ausschnitts II in Figur1,
Figur 3 eine Seitenansicht eines erfindungsgemäßen einschneidigen Fräswerkzeugs,
Figur 4 eine weitere Seitenansicht des Figur 3 gezeigten einschneidigen Fräswerkzeugs aus einer um etwa 90° gedrehten Richtung,
Figur 5 eine Draufsicht auf eine Stirnseite des in den Figuren 3 und 4 dargestellten einschneidigen Fräswerkzeugs.

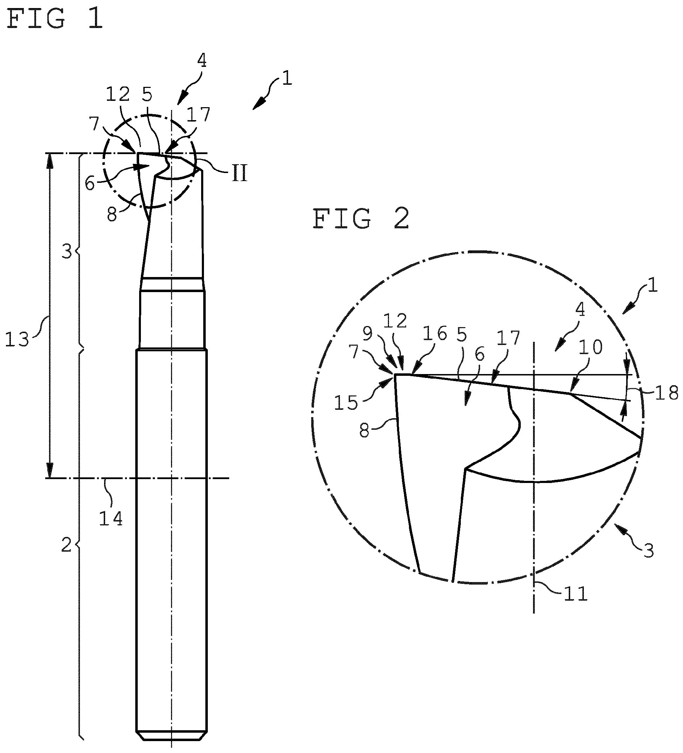

Die beiden in den Figuren 1 und 2 sowie 3 bis 5 exemplarisch abgebildeten einschneidigen Fräswerkzeuge 1 weisen jeweils einen im Wesentlichen zylinderförmigen Schaftabschnitt 2 auf, der in eine nicht dargestellte Frässpindel einer Fräsmaschine eingeführt werden kann und dazu dient, das einschneidige Fräswerkzeug 1 in der Fräsmaschine festzulegen. An den Schaftabschnitt 2 schließt sich ein Bearbeitungsabschnitt 3 an, an dessen dem Schaftabschnitt 2 abgewandten stirnseitigen Ende 4 eine Stirnschneide 5 ausgebildet ist.

Eine Spannut 6 erstreckt sich in axialer Richtung über den Bearbeitungsabschnitt 3 hinweg und mündet in das stirnseitige Ende 4 des Bearbeitungsabschnitts 3. Entlang der Spannut 6 ist in axialer Richtung an einem äußeren Umfangsrand 7 des einschneidigen Fräswerkzeugs 1 eine in axialer Richtung sich erstreckende Mantelschneide 8 ausgebildet. Die Mantelschneide 8 geht an dem stirnseitigen äußeren Umfangsrand 7 in die Stirnschneide 5 über. Die Stirnschneide 5 erstreckt sich von einem Außenende 9 an dem äußeren Umfangsrand 7 bis zu einem beabstandet von dem äußeren Umfangsrand 7 angeordneten und rotationsachsennahen Innenende 10, das sich in der Nähe einer Rotationsachse 11 des einschneidigen Fräswerkzeugs 1 befindet, um welche das einschneidige Fräswerkzeug 1 während des Betriebs rotiert. Dabei verläuft die Stirnschneide 5 durch die Rotationsachse 11 hindurch.

Die erfindungsgemäß ausgestaltete Stirnschneide 5 weist an ihrem dem äußeren Umfangsrand 7 zugewandten Außenende 9 einen Planabschnitt 12 auf. Innerhalb des Planabschnitts 12 weist die Stirnschneide 5 einen konstanten Planabstand 13 zu einer in dem Schaftabschnitt 2 senkrecht zu der Rotationsachse 11 verlaufenden Referenzebene 14 auf. Die Stirnschneide 5 verläuft demzufolge in dem Planabschnitt 12 in einer Ebene, die senkrecht zu der Rotationsachse 11 verläuft. Bei einer Rotation des einschneidigen Fräswerkzeugs 1 um die Rotationsachse 11 überstreicht der Planabschnitt 12 in einer senkrecht zu der Rotationsachse 11 angeordneten Ebene eine Kreisringfläche, deren äußerer, beziehungsweise innerer Radius von einem dem Außenende 9 zugewandten äußeren Ende 15 des Planabschnitts 12, beziehungsweise von einem dem Innenende 10 zugewandten inneren Ende 16 des Planabschnitts 12 gebildet wird.

An den Planabschnitt 12 schließt sich ein sich bis zu dem Innenende 10 erstreckender Schrägabschnitt 17 der Stirnschneide 5 an. In dem Schrägabschnitt 17 weist die Stirnschneide 5 einen geringeren Abstand zu der Referenzebene 14 als der Planabschnitt 12 mit seinem Planabstand 13 auf.

Bei dem in dem Ausführungsbeispiel gemäß den Figuren 1 und 2 schematisch dargestellten einschneidigen Fräswerkzeug 1 erstreckt sich der Schrägabschnitt 17 über die Rotationsachse 11 hinaus bis zu dem jenseits der Rotationsachse 11 dem äußeren Umfangsrand 7 gegenüberliegenden Innenende 10 der Stirnschneide 5. Der Schrägabschnitt 17 weist bei dieser Ausführungsvariante einen in den Figuren 1 und 2 dargestellten Seitenansicht gradlinigen Verlauf auf, wobei ein Winkel 18 zwischen dem gradlinig verlaufenden Schrägabschnitt 17 und einer Senkrechten zu der Rotationsachse 11, die durch den Planabschnitt 12 der Stirnschneide 5 verläuft, etwa 6° beträgt.

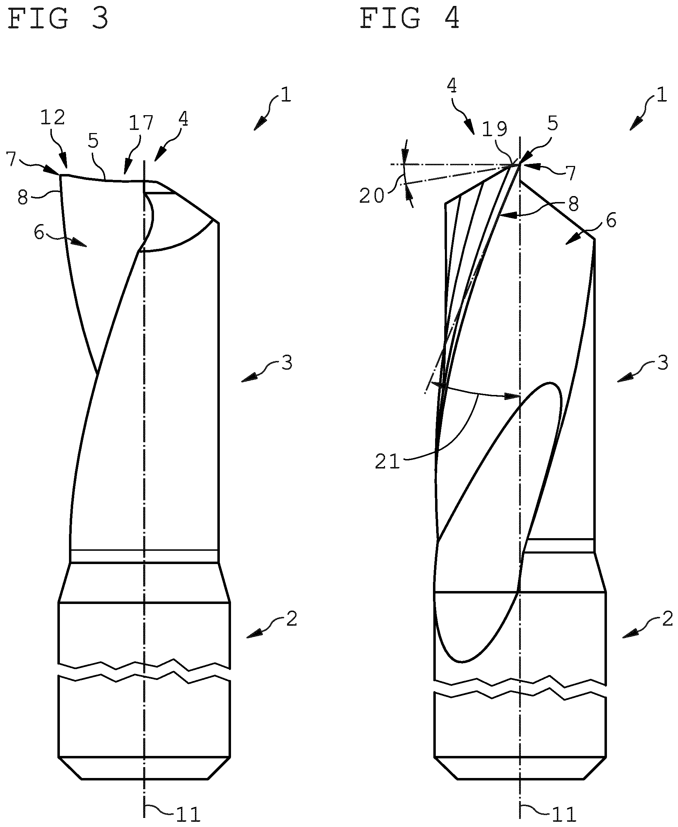

Bei dem in den Figuren 3 bis 5 dargestellten Ausführungsbeispiel des erfindungsgemäßen einschneidigen Fräswerkzeugs 1 weist die Stirnschneide 5 einen in der in Fig. 3 gezeigten Seitenansicht deutlich erkennbaren gekrümmten Verlauf auf, der einer Umfangslinie beziehungsweise der Mantelfläche der Spannut 6 folgt. An diesen gekrümmten Verlauf schließt sich ein im Wesentlichen gradlinig verlaufender Endabschnitt an, der durch die Rotationsachse 11 führt. Auch bei diesem Ausführungsbeispiel ist der Verlauf des Schrägabschnitts 17 der Stirnschneide 5 beziehungsweise der jeweilige Abstand der Stirnschneide 5 in dem Schrägabschnitt 17 relativ zu der Referenzebene 14 in dem Schaftabschnitt 2 so vorgegeben, dass bei einer Rotation des einschneidigen Fräswerkzeugs 1 um die Rotationsachse 11 von dem Schrägabschnitt 17 eine kegelförmige Mantelfläche gebildet wird. Die Mantellinie der kegelförmigen Mantelfläche weist eine Neigung von etwa 5° relativ zu einer Senkrechten zu der Rotationsachse 11 auf.

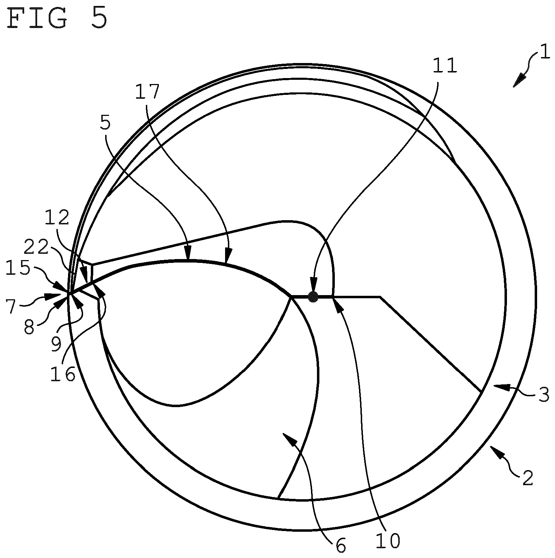

Auch der Planabschnitt 12 der Stirnschneide 5 in dem Ausführungsbeispiel gemäß den Figuren 3 bis 5 weist einen an die Formgebung der Spannut 6 angepassten gekrümmten Verlauf auf, wobei der Planabstand 13 der Stirnschneide 5 relativ zu der Referenzebene 14 konstant ist und sich die an die Formgebung der Spannut 6 angepasste Krümmung der Stirnschneide 5 in dem Planabschnitt 12 ausschließlich in einer senkrecht zu der Rotationsachse 11 angeordneten Ebene abspielt, die bei Fig. 5 mit der Abbildungsebene zusammenfällt. An die Stirnschneide 5 schließt entgegen der Rotationsrichtung eine in Fig. 4 deutlich erkennbare Freifläche 19 an, die eben ausgebildet ist und einen Winkel 20 von mehreren Grad relativ zu der senkrecht zu der Rotationsachse 11 ausgerichteten Ebene aufweist. Die Spannut 6 mündet mit einem Spanwinkel 21 in die Stirnschneide 5.

An dem äußeren Umfangsrand 7 ist eine Fase 22 angeordnet, um ein unkontrolliertes Abbrechen der Stirnschneide 5 an dem äußeren Umfangsrand 7 während des Betriebs zu vermeiden.

## Patentansprüche

1. Einschneidiges Fräswerkzeug (1) mit einem Schaftabschnitt (2) und mit einem Bearbeitungsabschnitt (3), wobei an einem dem Schaftabschnitt (2) abgewandten Ende (4) des Bearbeitungsabschnitts (3) eine Stirnschneide (5) ausgebildet ist, die sich in radialer Richtung von einem Außenende (9) an einem äußeren Umfangsrand (7) bis zu einem beabstandet von dem äußeren Umfangsrand (7) angeordneten und rotationsachsennahen Innenende (10) erstreckt, **dadurch gekennzeichnet, dass** sich die Stirnschneide (5) über die Rotationsachse (11) hinaus auf eine dem Außenende (9) der Stirnschneide (5) gegenüberliegende Seite bis zu einem radialen Abstand von der Rotationsachse (11) von 1% bis 20% des Radius des einschneidigen Fräswerkzeugs (1) hin erstreckt, und dass die Stirnschneide (5) an ihrem dem äußeren Umfangsrand (7) zugewandten Außenende (9) einen Planabschnitt (12) aufweist, in welchem die Stirnschneide (5) einen konstanten Planabstand (13) zu einer in dem Schaftabschnitt (2) senkrecht zur Rotationsachse (11) verlaufenden Referenzebene (14) aufweist, und einen sich an den Planabschnitt (12) anschließenden und bis zu dem Innenende (10) verlaufenden Schrägabschnitt (17) aufweist, in welchem die Stirnschneide (5) einen geringeren Abstand als den Planabstand (13) zu der Referenzebene (14) aufweist.

2. Einschneidiges Fräswerkzeug (1) nach Anspruch 1, **dadurch gekennzeichnet, dass** der Planabschnitt (12) der Stirnschneide (5) eine Länge zwischen 2% und 60%, vorzugsweise eine Länge zwischen 3% und 20% der Länge der Stirnschneide (5) aufweist.

3. Einschneidiges Fräswerkzeug (1) nach Anspruch 1 oder Anspruch 2, **dadurch gekennzeichnet, dass** sich der Abstand der Stirnschneide (5) von der Referenzebene (14) in dem Schrägabschnitt (17) von dem Planabschnitt (12) ausgehend bis zu dem Innenende (10) der Stirnschneide (5) hin kontinuierlich verringert.

4. Einschneidiges Fräswerkzeug (1) nach Anspruch 3, **dadurch gekennzeichnet, dass** eine gradlinig durch das Außenende (9) und das Innendende (10) der Stirnschneide (5) verlaufende Referenzschräge einen Winkel zwischen 2° und 30°, vorzugsweise zwischen 3° und 10° relativ zu einer Senkrechten zu der Rotationsachse (11) aufweist.

5. Einschneidiges Fräswerkzeug (1) nach Anspruch 3 oder Anspruch 4, **dadurch gekennzeichnet, dass** die von dem Schrägabschnitt (17) während einer Rotation um die Rotationsachse (11) gebildete Mantelfläche kegelförmig ist.

6. Einschneidiges Fräswerkzeug (1) nach Anspruch 5, **dadurch gekennzeichnet, dass** die Mantellinie der kegelförmigen Mantelfläche eine Neigung zwischen 2° und 30°, vorzugsweise zwischen 3° und 10° relativ zu einer Senkrechten zu der Rotationsachse (11) aufweist.

7. Einschneidiges Fräswerkzeug (1) nach einem der voranstehenden Ansprüche, **dadurch gekennzeichnet, dass** die Stirnschneide (5) an dem äußeren Umfangsrand (7) eine Fase (22) aufweist.

8. Einschneidiges Fräswerkzeug (1) nach einem der voranstehenden Ansprüche, **dadurch gekennzeichnet, dass** der Verlauf der Stirnschneide (5) einer Umfangslinie einer sich in axialer Richtung erstreckenden Spannut (6) folgt.

## Claims

1. Single-edged milling tool (1) having a shaft section (2) and having a machining section (3), wherein a face cutting edge (5) is formed on an end (4) of the machining section (3), said end facing away from the shaft section (2), and said face cutting edge extends in a radial direction from an outer end (9) at an outer peripheral edge (7) up to an inner end (10) that is arranged spaced apart from the outer peripheral edge (7) and close to the axis of rotation, **characterized in that** the face cutting edge (5) extends beyond the axis of rotation (11) to a side opposite the outer end (9) of the face cutting edge (5) up to a radial distance from the axis of rotation (11) of 1% to 20% of the radius of the single-edged milling tool (1), and **in that** the face cutting edge (5) comprises on its outer end (9) that is facing the outer peripheral edge (7) a planar portion (12) in which the face cutting edge (5) has a constant planar distance (13) to a reference plane (14) that in the shaft section (2) extends perpendicular to the axis of rotation (11), and said face cutting edge comprises an oblique portion (17) that adjoins the planar portion (12) and extends up to the inner end (10) and in said oblique portion the face cutting edge (5) has a smaller distance than the planar distance (13) to the reference plane (14).

2. Single-edged milling tool (1) according to Claim 1, **characterized in that** the planar portion (12) of the face cutting edge (5) has a length between 2% and 60%, preferably a length between 3% and 20%, of the length of the face cutting edge (5).

3. Single-edged milling tool (1) according to Claim 1 or Claim 2 **characterized in that** the distance of the face cutting edge (5) from the reference plane (14) in the oblique portion (17) starting from the planar portion (12) continuously reduces up to the inner end (10) of the face cutting edge (5).

4. Single-edged milling tool (1) according to Claim 3, **characterized in that** a reference incline that extends in a straight line through the outer end (9) and the inner end (10) of the face cutting edge (5) has an angle between 2° and 30°, preferably between 3° and 10° relative to a perpendicular with respect to the axis of rotation (11).

5. Single-edged milling tool (1) according to Claim 3 or Claim 4, **characterized in that** the peripheral surface that is formed by the oblique portion (17) during a rotation about the axis of rotation (11) is conical.

6. Single-edged milling tool (1) according to Claim 5, **characterized in that** the peripheral line of the conical peripheral surface has an incline between 2° and 30°, preferably between 3° and 10° relative to a perpendicular with respect to the axis of rotation (11).

7. Single-edged milling tool (1) according to one of the preceding claims, **characterized in that** the face cutting edge (5) comprises a chamfer (22) on the outer peripheral edge (7).

8. Single-edged milling tool (1) according to one of the preceding claims, **characterized in that** the progression of the face cutting edge (5) follows a peripheral line of a chip flute (6) that extends in the axial direction.

## Revendications

1. Outil de fraisage à arête de coupe unique (1) avec une section de tige (2) et avec une section d'usinage (3), dans lequel est réalisée, au niveau d'une extrémité (4), opposée à la section de tige (2), de la section d'usinage (3), une arête de coupe frontale (5), qui s'étend dans une direction radiale depuis une extrémité extérieure (9) au niveau d'un bord périphérique (7) extérieur jusqu'à une extrémité intérieure (10) disposée à distance du bord périphérique (7) extérieur et proche de l'axe de rotation, **caractérisé en ce que** l'arête de coupe frontale (5) s'étend au-delà de l'axe de rotation (11) sur un côté faisant face à l'extrémité extérieure (9) de l'arête de coupe frontale (5) jusqu'à une distance radiale de l'axe de rotation (11) de 1 % à 20 % du rayon de l'outil de fraisage à arête de coupe unique (1), et que l'arête de coupe frontale (5) présente, au niveau de son extrémité extérieure (9) tournée vers le bord périphérique (7) extérieur, une section plane (12), dans laquelle l'arête de coupe frontale (5) présente une distance plane (13) constante par rapport à un plan de référence (14) s'étendant dans la section de tige (2) de manière perpendiculaire par rapport à l'axe de rotation (11), et présente une section oblique (17) se joignant à la section plane (12) et s'étendant jusqu'à l'extrémité intérieure (10), dans laquelle l'arête de coupe frontale (5) présente une distance inférieure à la distance plane (13) par rapport au plan de référence (14).

2. Outil de fraisage à arête de coupe unique (1) selon la revendication 1, **caractérisé en ce que** la section plane (12) de l'arête de coupe frontale (5) présente une longueur entre 2 % et 60 %, de préférence une longueur entre 3 % et 20 % de la longueur de l'arête de coupe frontale (5).

3. Outil de fraisage à arête de coupe unique (1) selon la revendication 1 ou la revendication 2, **caractérisé en ce que** la distance de l'arête de coupe frontale (5) par rapport au plan de référence (14) se réduit en continu dans la section oblique (17) en partant de la section plane (12) jusqu'à l'extrémité intérieure (10) de l'arête de coupe frontale (5).

4. Outil de fraisage à arête de coupe unique (1) selon la revendication 3, **caractérisé en ce qu'**un biseau de référence s'étendant de manière rectiligne à travers l'extrémité extérieure (9) et l'extrémité intérieure (10) de l'arête de coupe frontale (5) présente un angle entre 2° et 30°, de préférence entre 3° et 10° par rapport à une perpendiculaire par rapport à l'axe de rotation (11).

5. Outil de fraisage à arête de coupe unique (1) selon la revendication 3 ou la revendication 4, **caractérisé en ce que** la surface enveloppante formée par la section oblique (17) au cours d'une rotation autour de l'axe de rotation (11) est de forme conique.

6. Outil de fraisage à arête de coupe unique (1) selon la revendication 5, **caractérisé en ce que** la ligne enveloppante de la surface enveloppante de forme conique présente une inclinaison entre 2° et 30°, de préférence entre 3° et 10° par rapport à une perpendiculaire par rapport à l'axe de rotation (11).

7. Outil de fraisage à arête de coupe unique (1) selon l'une quelconque des revendications précédentes, **caractérisé en ce que** l'arête de coupe frontale (5) présente, au niveau du bord périphérique (7) extérieur, un chanfrein (22).

8. Outil de fraisage à arête de coupe unique (1) selon l'une quelconque des revendications précédentes, **caractérisé en ce que** le profil de l'arête de coupe frontale (5) suit une ligne périphérique d'une gorge (6) s'étendant dans une direction axiale.
